# EUROPEAN PATENT APPLICATION

(11) **EP 4 714 715 A2**
(43) Date of publication of application: **25.03.2026**
(21) Application number: 25201715.7
(22) Date of filing: 11.09.2025
(51) Int. Cl.: B60L 3/00, B60L 50/40, B60L 50/60, B60L 58/10, B60L 58/12, B60L 58/18, B60L 58/22, H02J 7/34

(54) **BATTERY APPARATUS AND OPERATING METHOD THEREOF, AND POWER APPARATUS FOR VEHICLE**

(30) Priority: 19.09.2024 KR 20240126496
(71) Applicant: SAMSUNG SDI CO., LTD., Yongin-si, Gyeonggi-do 17084 (KR)
(72) Inventor: MIN, Byeong Seon, 16678 Suwon-si (KR)
(74) Representative: Marks & Clerk LLP

(57) **Abstract**

A battery apparatus, including a battery switch (SW_B) that allows or blocks an electrical connection between a first battery (B1) and a second battery (B2), a first power conversion module (PC1) that performs power conversion between the first battery (B1) and an intermediary capacitor(C), a second power conversion module (PC2) that performs power conversion between the second battery (B2) and the intermediary capacitor (C), and a processor (10) configured to control the first and second power conversion modules (PC1, PC2) so that the first and second batteries (B1, B2) are complementarily charged and discharged via the intermediary capacitor (C) in an open state of the battery switch (SW_B) and obtains characteristic parameters of the first and second batteries (B1, B2) after complementarily charging and discharging the first and second batteries (B1, B2) is completed.

## Description

### BACKGROUND

### 1. Field

Embodiments relate to a battery apparatus, an operating method thereof, and a power apparatus for a vehicle.

### 2. Description of the Related Art

Recently, the development of automobiles that generate power using eco-friendly alternative energy is being actively conducted domestically and internationally, and automobiles using such eco-friendly alternative energy include pure electric vehicles (EV), hybrid electric vehicles (HEV) that use both fossil fuel and electrical energy, and fuel cell electric vehicles (FCEV). **In** general, electric vehicles are equipped with a battery pack that supplies power to drive a driving motor (three-phase motor), a driving motor that is driven using the battery pack as a power source to drive the electric vehicle, and an inverter that drives the driving motor.

The above information disclosed in this Background section is for enhancement of understanding of the background of the present disclosure, and therefore, it may contain information that does not constitute the related (or prior) art.

### SUMMARY

Embodiments include a battery apparatus, including a battery switch that allows or blocks an electrical connection between a first battery and a second battery, a first power conversion module that performs power conversion between the first battery and an intermediary capacitor, a second power conversion module that performs power conversion between the second battery and the intermediary capacitor, and a processor configured to control the first and second power conversion modules so that the first and second batteries are complementarily charged and discharged via the intermediary capacitor in an open state of the battery switch and obtains characteristic parameters of the first and second batteries after complementarily charging and discharging the first and second batteries is completed.

If the processor controls the first and second power conversion modules for complementarily charging and discharging the first and second batteries is defined as a charge/discharge control operation, the charge/discharge control operation includes first and second charge/discharge control operations that are performed sequentially, and the processor may control the first and second power conversion modules so that the first and second batteries are complementarily charged and discharged in a process of each of the first and second charge/discharge control operations.

When performing the first charge/discharge control operation, the processor controls the first power conversion module so that the intermediary capacitor is charged by discharging the first battery and controls the second power conversion module so that the second battery is charged by discharging the intermediary capacitor.

When performing the second charge/discharge control operation following the first charge/discharge control operation, the processor may control the second power conversion module so that the intermediary capacitor is charged by discharging the second battery and controls the first power conversion module so that the first battery is charged by discharging the intermediary capacitor.

The processor may be further configured to switch the charge/discharge control operation from the first charge/discharge control operation to the second charge/discharge control operation when a state of charge (SOC) of the first battery reaches a predefined first reference SOC or a SOC of the second battery reaches a predefined second reference SOC in the process of performing the first charge/discharge control operation.

The processor may be further configured to terminate the charge/discharge control operation when an SOC of the first battery and an SOC of the second battery reach the same SOC in the process of performing the second charge/discharge control operation.

The processor may be further configured to obtain the characteristic parameters of the first and second batteries at a time point when a predefined idle time has elapsed from a time point when the charge/discharge control operation is completed.

The processor may be further configured to periodically and repeatedly obtains the characteristic parameters of the first and second batteries by performing the charge/discharge control operation again after obtaining the characteristic parameters of the first and second batteries.

The processor may initiate the charge/discharge control operation after opening the battery switch if an ignition of the vehicle is turned off.

The processor may close the battery switch so that the vehicle is driven using the first and second batteries as power sources if the vehicle's ignition is turned on after the charge/discharge control operation is completed.

The processor may be further configured to monitor states of the first and second batteries based on the characteristic parameters of the first and second batteries.

The characteristic parameters of the first and second batteries may include open circuit voltages (OCVs) of a plurality of battery cells included in the first and second batteries, and the processor may be further configured to detect an abnormal battery cell among the plurality of battery cells based on the OCVs.

The first and second power conversion modules may each include a bidirectional DC-DC converter.

Embodiments include an operating method of a battery, the operating method including providing an apparatus including a battery switch that allows or blocks an electrical connection between a first battery and a second battery, a first power conversion module that performs power conversion between the first battery and an intermediary capacitor, and a second power conversion module that performs power conversion between the second battery and the intermediary capacitor, the method including opening, by a processor, the battery switch, controlling, by the processor, the first and second power conversion modules so that the first and second batteries are complementarily charged and discharged via the intermediary capacitor, and obtaining, by the processor, characteristic parameters of the first and second batteries after the operation of complementarily charging and discharging the first and second batteries is completed.

If the control operation of each of the first and second power conversion modules for complementarily charging and discharging the first and second batteries is defined as a charge/discharge control operation, the charge/discharge control operation may include first and second charge/discharge control operations that are performed sequentially, and in the controlling, when performing the first charge/discharge control operation, the processor may control the first power conversion module so that the intermediary capacitor is charged by discharging the first battery and may control the second power conversion module so that the second battery is charged by discharging the intermediary capacitor.

In the controlling, when performing the second charge/discharge control operation following the first charge/discharge control operation, the processor may control the second power conversion module so that the intermediary capacitor is charged by discharging the second battery and may control the first power conversion module so that the first battery is charged by discharging the intermediary capacitor.

In the controlling, the processor may terminate the charge/discharge control operation if a state of charge (SOC) of the first battery and a SOC of the second battery are the same SOC in the process of performing the second charge/discharge control operation.

In the obtaining, the processor may obtain the characteristic parameters of the first and second batteries at a time point when a predefined idle time has elapsed from a time point when the charge/discharge control operation is completed.

As the controlling is performed again after the obtaining is performed, the characteristic parameters of the first and second batteries may be periodically and repeatedly obtained.

Embodiments include a power apparatus for a vehicle, including a battery switch that allows or blocks an electrical connection between a first battery and a second battery, a smoothing capacitor that smooths voltages transmitted from the first and second batteries, a first power conversion module that performs power conversion between the first battery and the smoothing capacitor, a second power conversion module that performs power conversion between the second battery and the smoothing capacitor, an inverter that drives a load of a vehicle based on the voltages smoothed by the smoothing capacitor, and a processor that controls the battery switch, the first and second power conversion modules, and the inverter, wherein the processor controls opening and closing of the battery switch according to an ignition state of the vehicle, and according to the opening and closing state of the battery switch, i) the processor controls the first and second power conversion modules so that the first and second batteries are complementarily charged and discharged via the smoothing capacitor, or ii) the processor controls the inverter to drive the load of the vehicle.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is a circuit diagram showing a battery apparatus and a power apparatus for a vehicle according to one or more embodiments of the present disclosure; and
FIGS. 2 and 3 are flowcharts showing an operating method of a battery apparatus and a power apparatus for a vehicle according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her disclosure in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as **A, B,** C, A and **B,** A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. **In** addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

First, a general process for detecting an abnormal battery cell among a plurality of battery cells included in a battery pack applied to an electric vehicle (hereinafter, referred to as a vehicle) will be described.

In order to obtain an accurate open circuit voltage of a battery cell, a 'charge/discharge operation of the battery cell' and 'voltage stabilization of the battery cell' are performed. That is, the open circuit voltage is measured at a time point when a defined time has elapsed, to allow for voltage stabilization, after a charge/discharge operation of the battery cell. Specifically, after a change in voltage or a change in state of charge (SOC) due to the charging or discharging of the battery cell is formed, a plurality of open circuit voltages (OCVs) are obtained for the same battery cell by measuring the OCV of the battery cell at a time point when a predefined idle time (e.g., 2 hours) has elapsed in the state in which the vehicle's ignition is turned off. When a statistical value (e.g., an average value or median value) of the plurality of obtained OCVs is outside a predefined reference voltage range, the corresponding battery cell is detected as an abnormal battery cell. That is, 'the charge or discharge operation of the battery cell' and the elapse of the predefined idle time in the state in which the vehicle's ignition is turned off' are conditions for a more accurate measurement of an OCV of the battery cell.

Among the above conditions, the 'charge or discharge operation of the battery cell' may be implemented by a process in which the change in voltage or the change in SOC of the battery cell is achieved as the battery pack and the battery cell are charged by a commercial AC power source through an on-board charger (OBC) of the vehicle, or by a process in which the change in voltage or the change in SOC of the battery cell is achieved as the battery pack and the battery cell are discharged in the driving state of the vehicle.

In this case, since the charging of the battery pack and the battery cell by the OBC or the discharging of the battery pack and the battery cell by the driving of the vehicle is non-periodic rather than periodic, there is a limit to the number of OCVs that can be obtained, and therefore, when detecting an abnormal battery cell using the statistical value of the plurality of OCVs, there may be a problem that the accuracy of detection is reduced.

In addition, even when the idle time for voltage stabilization of the battery cell has elapsed, there may be a case in which different OCVs are measured for the same battery cell depending on the charging state or discharging state of the vehicle. For example, the power consumption of the battery pack during driving of the vehicle, the temperature of the battery pack at a time point of completion of driving of the vehicle, and the driving time of the vehicle may vary depending on each driving situation of the vehicle, and therefore, even when the idle time for voltage stabilization has elapsed in the state in which the vehicle's ignition is turned off, a variation in the OCV caused by a variation in the driving environment of the vehicle may not be eliminated, and thus different OCVs may be measured for the same battery cell depending on the driving environment of the vehicle, resulting in a problem in which the accuracy of detecting an abnormal battery cell is reduced.

The present embodiment proposes a mechanism that can periodically obtain the OCV of the battery cells and eliminate the variation in the OCV caused by the variation in the driving environment of the vehicle in order to improve the accuracy of detecting an abnormal battery cell.

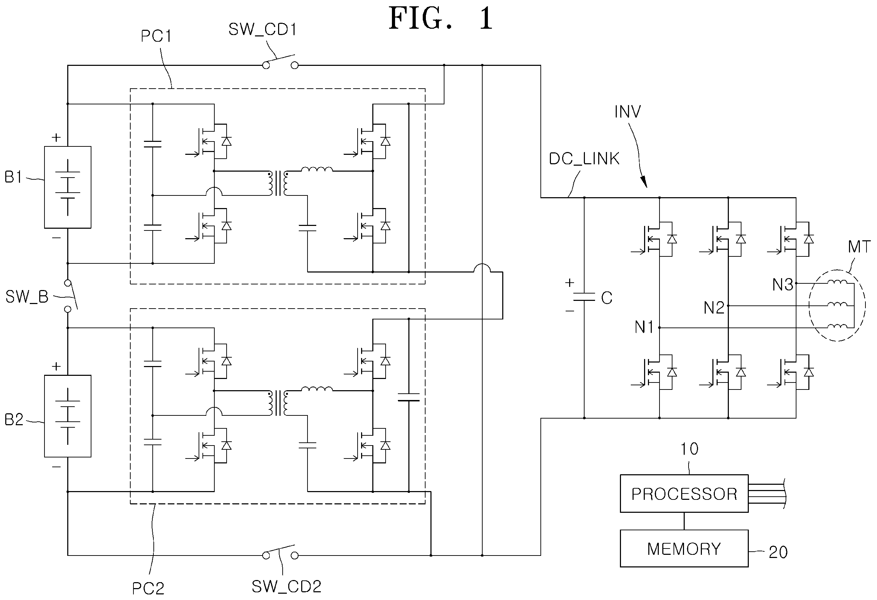

FIG. 1 is a circuit diagram showing a battery apparatus and a power apparatus for a vehicle according to one embodiment of the present disclosure.

Referring to FIG. 1, the power apparatus for a vehicle according to the present embodiment may include first and second batteries B1 and B2, a battery switch SW_B, first and second charge/discharge switches SW_CD1 and SW_CD2, an intermediary capacitor C, first and second power conversion modules PC1 and PC2, an inverter INV, a processor 10, and a memory 20. A vehicle including the power apparatus of FIG. 1 may refer to an eco-friendly vehicle that utilizes power supplied from a battery as a driving power source such as a pure electric vehicle (EV) or a hybrid electric vehicle (HEV) (e.g., a Plug-In Hybrid electric vehicle (PHEV)).

The first and second batteries B1 and B2 may function as a power source for driving a load (e.g., a driving motor) MT of the vehicle. The first and second batteries B1 and B2 may correspond to a battery module or a battery pack, and accordingly, may be configured to include a plurality of battery cells. The first and second batteries B1 and B2 may be connected to each other in series through the battery switch SW_B described below. In addition, when an external charger is connected to a charging interface of the vehicle in a state in which the vehicle's ignition is turned off, the first and second batteries B1 and B2 may be configured to be charged by a commercial AC power source under the control of an on-board charger (OBC) of the vehicle. Meanwhile, the present embodiment describes a structure in which two batteries are applied as an example, but three or more batteries may be provided depending on the application. That is, the number (i.e., two) of batteries described in the present embodiment may be the minimum number of batteries required to implement the present embodiment. The power conversion module described below may be provided in a number corresponding to the number of batteries.

The battery switch SW_B may be connected between the first and second batteries B1 and B2 to allow or block an electrical connection between the first and second batteries B1 and B2. As described below, in an ignition-on state of the vehicle (or a driving state of the vehicle), the battery switch SW_B may be controlled to be in a closed state so that the first and second batteries B1 and B2 function as a power source for driving a load MT of the vehicle, and in an ignition-off state of the vehicle, the battery switch SW_B may be controlled to be in an open state so that the first and second batteries B1 and B2 are independently charged and discharged. The battery switch SW_B may be implemented with any type of switching element such as a relay, which is a mechanical switch, or a field effect transistor (FET), which is an electronic switch.

The first and second charge/discharge switches SW_CD1 and SW_CD2 may be provided between the first and second batteries B1 and B2 and a DC-Link of the inverter (INV) described below. FIG. 1 shows an example in which the first charge/discharge switch SW_CD1 is connected between a positive node of the first battery B1 and a positive node of the DC-Link, and the second charge/discharge switch SW_CD2 is connected between a negative node of the second battery B2 and a negative node of the DC-Link. Accordingly, the first and second charge/discharge switches SW-CD1 and SW-CD2 may be turned on/off under the control of the processor 10 to control the flow of a charging current supplied to the battery or a discharging current drawn from the battery. The first and second charge/discharge switches SW_CD1 and SW_CD2 may be implemented with any type of switching element such as a relay, which is a mechanical switch, or a FET, which is an electronic switch.

The intermediary capacitor C may operate to temporarily store and withdraw power so that the first and second batteries B1 and B2 are complementarily charged and discharged, thereby mediating an operation of complementarily charging and discharging the first and second batteries B1 and B2 (a detailed description will be provided below). In the present embodiment, the intermediary capacitor C may correspond to a smoothing capacitor provided in the vehicle to smooth a voltage transmitted from the first and second batteries B1 and B2 and supply the smoothed voltage to the inverter INV described below. The intermediary capacitor C may perform a function of smoothing a DC voltage supplied from the first and second batteries B1 and B2 to the inverter INV in the ignition-on state of the vehicle, and perform a function of mediating the flow of power between the first and second batteries B1 and B2 to support the operation of complementarily charging and discharging the first and second batteries B1 and B2 in the ignition-off state of the vehicle. That is, the smoothing capacitor provided in the vehicle to smooth the DC voltage supplied to the DC-Link of the inverter INV is adopted as a medium to mediate the flow of power between the first and second batteries B1 and B2 in the operation of complementarily charging and discharging the first and second batteries B1 and B2, which functions as a pre-control operation to improve the measurement reliability and measurement accuracy of a characteristic parameter (i.e., OCV) of the battery in the present embodiment. The intermediary capacitor C and the smoothing capacitor mentioned in the present specification refer to the same component. The capacitance of the intermediary capacitor C may be pre-designed to correspond to a predefined design voltage (hereinafter, referred to as a DC-Link voltage) for the DC-Link of the inverter INV (the DC-Link voltage has the same meaning as a voltage across both ends of the intermediary capacitor (C)).

The first power conversion module PC1 may perform power conversion between the first battery B1 and the intermediary capacitor C. Specifically, the first power conversion module PC1 may be implemented as a bidirectional DC-DC converter for converting a first DC voltage of the first battery B1 into the DC-Link voltage to charge the intermediary capacitor C (which corresponds to a case in which the intermediary capacitor C is charged by discharging the first battery B1), or converting the DC-Link voltage of the intermediary capacitor C into the first DC voltage to charge the first battery B1 (which corresponds to a case in which the first battery B1 is charged by discharging the intermediary capacitor C). A pair of first input/output terminals of the first power conversion module PC1 are respectively connected to each end of the first battery B1, a second input/output terminal is connected to both ends of the intermediary capacitor C (i.e., both ends of the DC-Link), and the first and second input/output terminals may be configured to be electrically separated by the first charge/discharge switch SW_CD1. A third input/output terminal of the first power conversion module PC1 may be connected to a third input/output terminal of the second power conversion module (described below). The first power conversion module PC1 may be implemented with various types of converters within a range in which bidirectional DC-DC conversion may be performed, and FIG. 1 shows an example in which the first power conversion module PC1 is implemented as a resonant converter (since the resonant converter is a well-known power conversion device, a reference numeral for each element constituting the resonant converter in FIG. 1 is omitted). A transformer turn ratio for a primary circuit (the first battery B1 side circuit) and a secondary circuit (the intermediary capacitor C side circuit) of the first power conversion module PC1 may be pre-designed based on the magnitudes of the designed first DC voltage and DC-Link voltage (e.g., when the first DC voltage and the DC-Link voltage are 350 V and 385 V, respectively, the transformer turn ratio may be designed as 1:1.1). The first power conversion module PC1 may be configured to be activated only when the charge/discharge control operation described below is performed by the processor 10.

The second power conversion module PC2 may perform power conversion between the second battery B2 and the intermediary capacitor C. Specifically, the second power conversion module PC2 may be implemented as a bidirectional DC-DC converter for converting a second DC voltage of the second battery B2 into the DC-Link voltage to charge the intermediary capacitor C (which corresponds to a case in which the intermediary capacitor C is charged by discharging the second battery B2), or converting the DC-Link voltage of the intermediary capacitor C into the second DC voltage to charge the second battery B2 (which corresponds to a case in which the second battery B2 is charged by discharging the intermediary capacitor C). A pair of first input/output terminals of the second power conversion module PC2 are respectively connected to each end of the second battery B2, and a second input/output terminal is connected to both ends of the intermediary capacitor C (i.e., both ends of the DC-Link), and the first and second input/output terminals may be configured to be electrically separated by the second charge/discharge switch SW_CD2. A third input/output terminal of the second power conversion module PC2 may be connected to the third input/output terminal of the first power conversion module (as described above). The second power conversion module PC2 may be implemented with various types of converters within a range that may perform bidirectional DC-DC conversion, and FIG. 1 shows an example in which the second power conversion module PC2 is implemented as a resonant converter. A transformer turn ratio of a primary circuit (the second battery B2 side circuit) and a secondary circuit (the intermediary capacitor C side circuit) of the second power conversion module PC2 may be pre-designed based on the magnitudes of the designed second DC voltage and DC-Link voltage (e.g., when the second DC voltage and the DC-Link voltage are 350 V and 385 V, respectively, the transformer turn ratio may be designed as 1:1.1). The second power conversion module PC2 may be configured to be activated only when the charge/discharge control operation described below is performed by the processor 10.

The inverter INV may generate an AC current for driving the load MT based on a DC current voltage smoothed by the smoothing capacitor C to drive the load MT (hereinafter, an example in which the load MT is implemented as a three-phase motor MT will be described). As shown in FIG. 1, the inverter INV may include a first upper switch and a first lower switch connected in series at a first node N1 from which a first-phase AC current is output, a second upper switch and a second lower switch connected in series at a second node N2 from which a second-phase AC current is output, and a third upper switch and a third lower switch connected in series at a third node N3 from which a third-phase AC current is output (since the inverter INV is a well-known motor driving device, a reference numeral for each element constituting the inverter INV is omitted in FIG. 1). Accordingly, in a state in which the DC voltage smoothed by the smoothing capacitor C is supplied to the DC-Link, the vehicle may be driven as the three-phase motor MT is rotated by controlling the operation of the first to third upper switches and the first to third lower switches according to a pulse width modulation (PWM) control signal applied from the processor 10 so that the first to third phase currents are output from the first to third nodes N1 to N3 to the three-phase motor MT and the output first to third phase currents are applied to first to third phase inductors of the three-phase motor MT.

The processor 10 may be configured to interlock and control the battery switch SW_B, the first and second charge/discharge switches SW_CD1 and SW_CD2, the first and second power conversion modules PC1 and PC2, and the inverter INV. The processor 10 may be implemented as a central processing unit (CPU) or a system on chip (SoC), may control a plurality of hardware or software components by driving an operating system or an application, and may perform various types of data processing and calculations. The processor 10 may be configured to execute at least one command stored in the memory 20 and store the execution result data in the memory 20. When the first and second batteries B1 and B2 are implemented as battery modules, the processor 10 may correspond to a micro controller unit (MCU) or an analog front end IC (AFE IC) of a battery management system (BMS), and when the first and second batteries B1 and B2 are implemented as battery packs, the processor 10 may be implemented as a battery pack control module (BPCM).

The memory 20 may store at least one command executed by the processor 10. In addition, in the present embodiment, the memory 20 may store an algorithm (a program or an applet) for the charge/discharge control operation described below. The memory 20 may be implemented as a volatile storage medium and/or a non-volatile storage medium and implemented as, for example, a read-only memory (ROM) and/or a random access memory (RAM).

Among the components included in the power apparatus for the vehicle described above, the battery switch SW_B, the first and second charge/discharge switches SW_CD1 and SW_CD2, the first and second power conversion modules PC1 and PC2, the processor 10, and the memory 20 constitute the battery apparatus of the present embodiment.

The operation of the processor 10 is described in detail.

The processor 10 may control the opening and closing of the battery switch SW_B, the opening and closing of the first and second charge/discharge switches SW_CD1 and SW_CD2, and whether the first and second power conversion modules PC1 and PC2 are activated according to the ignition state of the vehicle.

Specifically, the processor 10 may detect the ignition-on state of the vehicle by directly receiving an ignition signal or receiving a signal indicating the ignition-on state of the vehicle from an electronic control unit (ECU) of the vehicle. When the vehicle's ignition is turned on, the processor 10 may enter a normal driving mode of the vehicle to control the battery switch SW_B and the first and second charge/discharge switches SW_CD1 and SW_CD2 to be in a closed state and deactivate the first and second power conversion modules PC1 and PC2 (i.e., turn off each switch included in the first and second power conversion modules PC1 and PC2). Accordingly, the first and second batteries B1 and B2 may be connected in series to function as a power source for driving the driving motor MT (three-phase motor) of the vehicle, and the first and second power conversion modules PC1 and PC2 do not affect the driving of the vehicle.

In the state in which the DC voltages from the first and second batteries B1 and B2 are smoothed by the intermediary capacitor C (smoothing capacitor) and applied to the DC-Link, the processor 10 may PWM-control the inverter INV so that the first to third-phase AC currents are applied from the first to third nodes N1 to N3 of the inverter INV to the driving motor MT (a PWM control algorithm of the inverter INV for driving the driving motor MT may be predefined in the memory 20). As the driving motor MT is driven, the vehicle is driven, and the first and second batteries B1 and B2 that function as the power source for the driving motor MT may be discharged.

When the vehicle's ignition is turned off (e.g. after the vehicle is driven), the processor 10 may enter an abnormal battery cell detection mode to control the battery switch SW_B and the first and second charge/discharge switches SW_CD1 and SW_CD2 to be in an open state. As the battery switch SW_B is controlled to be in the open state, the electrical connection between the first and second batteries B1 and B2 is disconnected so that a circuit configuration in which the first and second batteries B1 and B2 may be charged and discharged independently of each other is provided. In addition, as the first and second charge/discharge switches SW_CD1 and SW_CD2 are controlled to be in the open state, the first and second batteries B1 and B2 are electrically separated from the DC-Link.

In a state in which the battery switch SW_B and the first and second charge/discharge switches SW_CD1 and SW_CD2 are open, the processor 10 may control the first and second power conversion modules PC1 and PC2 so that the first and second batteries B1 and B2 are complementarily charged and discharged via the intermediary capacitor C. To help understand the embodiment, the control operation of each of the first and second power conversion modules PC1 and PC2 to complementarily charge and discharge the first and second batteries B1 and B2 is defined as the charge/discharge control operation. The action of complementarily charging and discharging two batteries may include the action of charging one of the two batteries and, at the same time, discharging the other of the two batteries. In each charge/discharge control operation for the two batteries, one battery may be discharged to a first terminal of the intermediary capacitor C and the second battery may be simultaneously charged from a second terminal of the intermediary capacitor C.

The charge/discharge control operation may include first and second charge/discharge control operations that are performed sequentially. In the first charge/discharge control operation, one battery (e.g. the first battery B1) is discharged and the other battery (e.g. the second battery B2) is charged. In the second charge/discharge operation, the direction of charge/discharge is reversed (i.e. the one battery is charged and the other battery is discharged). The processor 10 may control the first and second power conversion modules PC1 and PC2 so that the first and second batteries B1 and B2 are complementarily charged and discharged in a process of each of the first and second charge/discharge control operations. That is, in both the first and second charge/discharge control operations, the first and second batteries B1 and B2 are complementarily charged and discharged.

To describe the charge/discharge control operation in detail, when performing the first charge/discharge control operation, the processor 10 may control the first power conversion module PC1 so that the intermediary capacitor C is charged by discharging the first battery B1 and control the second power conversion module PC2 so that the second battery B2 is charged by discharging the intermediary capacitor C. The first battery B1 discharged during the first charge/discharge control operation may be a battery having a higher SOC than the second battery B2. For example, the SOC of the first battery B1 may be 60% and the SOC of the second battery B2 may be 40% based on a time point at which the abnormal battery cell detection mode is entered.

During the first charge/discharge control operation, the first power conversion module PC1 may convert the first DC voltage of the first battery B1 into the DC-Link voltage under the control of the processor 10 to charge the intermediary capacitor C. That is, the intermediary capacitor C may be charged by a voltage (power) discharged from the first battery B1. In addition, the second power conversion module PC2 may convert the DC-Link voltage of the intermediary capacitor C into the second DC voltage of the second battery B2 to charge the second battery B2 under the control of the processor 10. Meanwhile, the first and second DC voltages may be designed to have the same value. The power conversion operations of the first and second power conversion modules PC1 and PC2 may be performed simultaneously (in parallel). Accordingly, in the process of the first charge/discharge control operation, the first and second batteries B1 and B2 may operate to be complementarily charged and discharged based on a temporary power storage operation and power withdrawal operation of the intermediary capacitor C.

The processor 10 may be configured to monitor the SOC of the first battery B1 and the second battery B2. For example, the processor 10 may be configured to receive an indication of the SOC for each battery B1 and B2, and/or the processor 10 may be configured to determine the state of charge for each battery from parameters of each battery (for example, from a measured voltage and a known discharge curve, current integration or other techniques). In a process in which the first battery B1 is discharged and the second battery B2 is charged according to the first charge/discharge control operation, when the SOC of the first battery B1 reaches a predefined first reference SOC (hereafter, referred to as a first switching condition) or the SOC of the second battery B2 reaches a predefined second reference SOC (hereafter, referred to as a second switching condition), the processor 10 may switch the charge/discharge control operation from the first charge/discharge control operation to the second charge/discharge control operation. The first and second reference SOCs may be predefined such that the first reference SOC is lower than the second reference SOC. For example, the first and second reference SOCs may respectively be predefined as 40% and 60%. In this example, when the first battery B1 is discharged and the SOC thereof reaches 40%, or the second battery B2 is charged and the SOC thereof reaches 60%, the processor 10 may switch the charge/discharge control operation from the first charge/discharge control operation to the second charge/discharge control operation (the first switching condition and the second switching condition described above have substantially the same meaning in that the second battery B2 is charged by the amount of discharge of the first battery B1).

When performing the second charge/discharge control operation, the processor 10 may control the second power conversion module PC2 so that the intermediary capacitor C is charged by discharging the second battery B2 and control the first power conversion module PC1 so that the first battery B1 is charged by discharging the intermediary capacitor C.

Specifically, during the second charge/discharge control operation, the second power conversion module PC2 may convert the second DC voltage of the second battery B2 into the DC-Link voltage under the control of the processor 10 to charge the intermediary capacitor C. That is, the intermediary capacitor C may be charged by a voltage (power) discharged from the second battery B2. In addition, the first power conversion module PC1 may convert the DC-Link voltage of the intermediary capacitor C into the first DC voltage of the first battery B1 under the control of the processor 10 to charge the first battery B1. The power conversion operations of the first and second power conversion modules PC1 and PC2 are performed simultaneously (in parallel). Accordingly, in the process of the second charge/discharge control operation, the first and second batteries B1 and B2 may operate to be complementarily charged and discharged based on a temporary power storage operation and power withdrawal operation of the intermediary capacitor C.

In a process in which the second battery B2 is discharged and the first battery B1 is charged according to the second charge/discharge control operation, when the SOC of the first battery B1 and the SOC of the second battery B2 reach the same SOC, the processor 10 may terminate the second charge/discharge control operation (i.e., terminate the entire charge/discharge control operation). In the above-described example, when the second battery B2 is discharged and the SOC thereof decreases from 60%, the first battery B1 is charged and the SOC thereof increases from 40%, and the SOCs of the first and second batteries B1 and B2 reach the same value of 50%, the processor 10 may terminate the second charge/discharge control operation.

Through the first and second charge/discharge control operations, both the first and second batteries B1 and B2 are charged and discharged, and accordingly, an actual operation of the battery can be accurately simulated compared to a case in which only charging is performed or only discharging is performed, thereby improving the measurement accuracy of the OCV of the battery cell described below.

Meanwhile, a control algorithm of the first and second power conversion modules PC1 and PC2 for the charge/discharge control operation may be predefined in the memory 20.

The above-described charge/discharge control operation corresponds to the 'charge or discharge operation of the battery cell,' which is the above-described condition for detecting the abnormal battery cell.

When the charge/discharge control operation is completed, the processor 10 may obtain the characteristic parameters of the first and second batteries B1 and B2 at a time point when a predefined idle time has elapsed from a time point when the charge/discharge control operation is completed. For example, the processor 10 may obtain (e.g. measure) the OCV of each of the plurality of battery cells included in the first and second batteries B1 and B2.

During the idle time, the processor 10 may control the battery switch SW_B to be in an open state, control the first and second charge/discharge switches SW_CD1 and SW_CD2 to be in an open state, deactivate the first and second power conversion modules PC1 and PC2, and deactivate the inverter INV. That is, during the idle time, all components constituting the power apparatus remain in a turned-off state or a deactivated state. The idle time functions as a time for stabilizing the voltage of the battery cell.

The elapse of the idle time corresponds to 'the elapse of the predefined idle time in the state in which the vehicle's ignition is turned off,' which is the above-described condition for detecting the abnormal battery cell.

As long as the vehicle's ignition is not turned on, the processor 10 may periodically and repeatedly obtain the characteristic parameters of the first and second batteries B1 and B2 by performing the charge/discharge control operation again after obtaining the characteristic parameters of the first and second batteries. Thereafter, when the vehicle's ignition is turned on, the processor 10 may be configured to enter the above-described normal driving mode.

The processor 10 may be configured to obtain at least a predefined number of measurements of each characteristic parameter (e.g. a predefined number of OCV measurements) of the first and second batteries B1 and B2. After the predefined number of measurements are obtained, the processor 10 may monitor the states of the first and second batteries B1 and B2 based on the obtained measurements of the characteristic parameters. For example, when as many OCVs as a predefined number are obtained for each battery cell, the processor 10 may detect an abnormal battery cell based on the obtained OCVs. For example, the processor 10 is configured to determine a statistical value (e.g., an average or median value) based on the plurality of OCVs. **In** this case, when a statistical value (e.g., the average or median value) of the plurality of OCVs is outside a predefined reference voltage range, the processor 10 may detect that the corresponding battery cell is an abnormal battery cell.

The technical effects of the above-described configuration are explained below.

The present embodiment adopts, as 'the charge/discharge operation of the battery cell,' which is a condition for detecting an abnormal battery cell, the operation of complementarily charging and discharging the first and second batteries B1 and B2 through the control of the first and second power conversion modules PC1 and PC2 instead of a charging operation of the battery pack and the battery cell by an OBC or a discharging operation of the battery pack and the battery cell by the driving of the vehicle. By obtaining the OCV of the battery cell based on the operation of complementarily charging and discharging the first and second batteries B1 and B2 through the control of the first and second power conversion modules PC1 and PC2 instead of the charging of the battery or the driving of the vehicle that is performed irregularly and inconsistently by a user (a vehicle driver), it is possible to secure a quantitative criterion of 'the charge/discharge operation of the battery cell,' which is a condition for detecting an abnormal battery cell, and the periodicity of obtaining the OCV.

By periodically and repeatedly obtaining the OCV of the battery cell, a period in which the OCV is obtained in a time section in which the ignition-off state of the vehicle is maintained can remain constant, and the number of obtained OCVs can increase, thereby improving the reliability and accuracy of abnormal battery cell detection.

The SOCs of the first and second batteries B1 and B2 may be maintained at the same value from a time point when the idle time is initiated by the operation of complementarily charging and discharging the first and second batteries B1 and B2 through the control of the first and second power conversion modules PC1 and PC2, thereby minimizing the variation in the OCV for the same battery cell, which is caused by the characteristics of the battery pack and the environmental variations (e.g., a variation in the power consumption of the battery pack, a variation in the temperature of the battery pack at a time point when the driving of the vehicle is completed, and a variation in the driving time of the vehicle) caused by the driving situation of the vehicle.

In addition, by identically setting the SOC of the first and second batteries B1 and B2 through the operation of complementarily charging and discharging the first and second batteries B1 and B2 through the control of the first and second power conversion modules PC1 and PC2, the SOCs of the first and second batteries B1 and B2 can maintain a balanced state in a state in which subsequent driving of the vehicle is initiated, thereby preventing a malfunction of the battery pack and improving the driving stability of the vehicle.

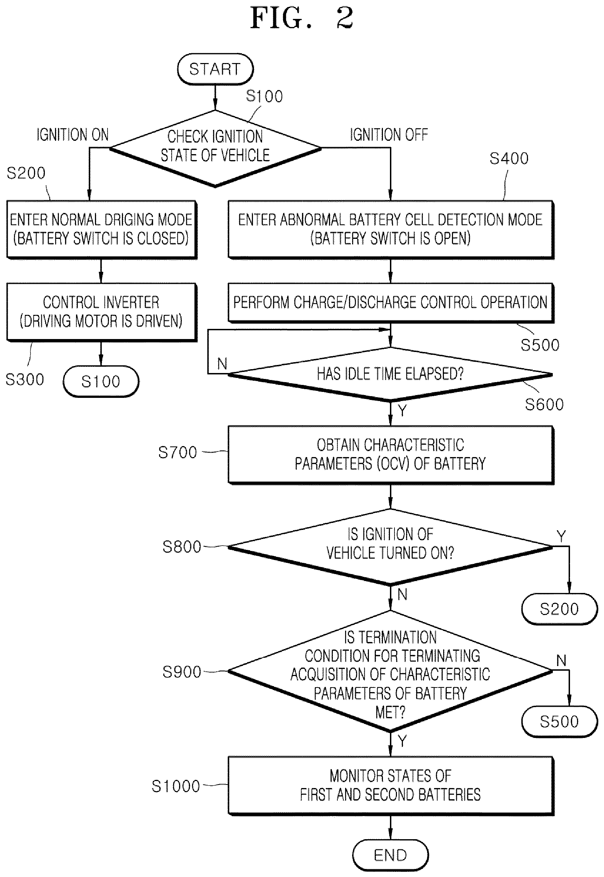

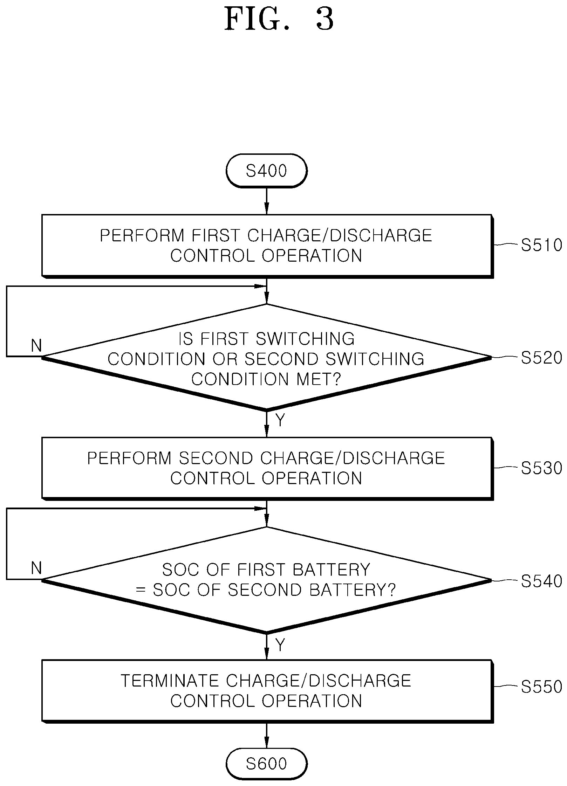

FIGS. 2 and 3 are flowcharts showing an operating method of a power apparatus for a vehicle according to one embodiment of the present disclosure. The operating method of a power apparatus for a vehicle of the present embodiment is described with reference to FIGS. 2 and 3, a detailed description of parts that overlap the above-described content is omitted, and the following description focuses on a time-series configuration.

First, the processor 10 checks an ignition state of a vehicle (S100). In operation S 100, the processor 10 may check the ignition state of the vehicle by determining whether an ignition signal is in an enabled state or whether a signal indicating an ignition-on state of the vehicle, which is input from an ECU of the vehicle, is in an enabled state.

When it is determined in operation S100 that the vehicle is in the ignition-on state, the processor 10 enters a normal driving mode (S200). In operation S200, the processor 10 controls the battery switch SW_B and the first and second charge/discharge switches SW_CD1 and SW_CD2 to be in a closed state and deactivates the first and second power conversion modules PC1 and PC2. Through operation S200, a DC voltage from the first and second batteries B1 and B2 is smoothed by the intermediary capacitor C (smoothing capacitor) and applied to a DC-Link.

After operation S200, the processor 10 PWM-controls the inverter INV so that the first to third phase AC currents are applied from the first to third nodes N1 to N3 of the inverter INV to the driving motor MT (S300). Accordingly, the driving motor MT is driven to drive the vehicle, and the first and second batteries B1 and B2 that function as a power source for the driving motor MT are discharged. After operation S300, operation S100 may be performed again.

Meanwhile, when it is determined in operation S100 that the vehicle is in an ignition-off state, the processor 10 enters an abnormal battery cell detection mode (S400). In operation S400, the processor 10 controls the battery switch SW_B and the first and second charge/discharge switches SW_CD1 and SW_CD2 to be in an open state. Through operation S400, the electrical connection between the first and second batteries B1 and B2 is disconnected so that a circuit configuration in which the first and second batteries B1 and B2 may be charged and discharged independently of each other is provided, and the first and second batteries B1 and B2 are electrically separated from the DC-Link.

After operation S400, the processor 10 controls the first and second power conversion modules PC1 and PC2 so that the first and second batteries B1 and B2 are complementarily charged and discharged via the intermediary capacitor C (S500) (that is, performs the charge/discharge control operation).

More specifically, referring to FIG. 3, when performing a first charge/discharge control operation, the processor 10 controls the first power conversion module PC1 so that the intermediary capacitor C is charged by discharging the first battery B1 and controls the second power conversion module PC2 so that the second battery B2 is charged by discharging the intermediary capacitor C (S510). In operation S510, the first battery B1 is discharged, and the second battery B2 is charged.

Subsequently, the processor 10 determines whether a first switching condition in which the SOC of the first battery B1 reaches a predefined first reference SOC or a second switching condition in which the SOC of the second battery B2 reaches a predefined second reference SOC is met (S520).

When it is determined in operation S520 that the first switching condition or the second switching condition is met, the processor 10 switches the charge/discharge control operation from the first charge/discharge control operation to the second charge/discharge control operation, controls the second power conversion module PC2 so that the intermediary capacitor C is charged by discharging the second battery B2, and controls the first power conversion module PC1 so that the first battery B1 is charged by discharging the intermediary capacitor C (S530). In operation S530, the second battery B2 is discharged and the first battery B1 is charged.

Subsequently, the processor 10 determines whether the SOC of the first battery B1 and the SOC of the second battery B2 have reached the same SOC (S540).

When it is determined in operation S540 that the SOC of the first battery B1 and the SOC of the second battery B2 have reached the same SOC, the processor 10 terminates the charge/discharge control operation (S550).

After operation S500, the processor 10 may determine whether a predefined idle time has elapsed from a time point when the charge/discharge control operation was completed (S600).

When it is determined in operation S600 that the idle time has elapsed, characteristic parameters (that is, an OCV of the battery cell) of the first and second batteries B1 and B2 are obtained at the time when the idle time has elapsed (S700). As described above, by waiting for an idle time to elapse, the accuracy of the OCV measurement can be improved. However, in some embodiments the processor 10 does not wait for an idle time to elapse, and operation S500 proceeds directly to operation S700.

After operation S700, the processor 10 determines whether the vehicle's ignition has been turned on (S800).

When it is determined in operation S800 that the vehicle's ignition has been turned on, operation S200 is performed.

When it is determined in operation S800 that the vehicle's ignition has not been turned on (that is, the vehicle ignition-off state is maintained), the processor 10 determines whether a termination condition for terminating the acquisition of the characteristic parameters of the battery is met (S900). For example, the condition for terminating the acquisition of characteristic parameters may be a condition that a predetermined number of measurements of each characteristic parameter have been obtained. **In** one example, the above-described termination condition for terminating the acquisition of the characteristic parameters of the battery may be a condition that as many OCVs as a predefined number are obtained for each battery cell (i.e., each of all battery cells included in the first and second batteries B1 and B2).

When it is determined in operation S900 that the termination condition for terminating the acquisition of the characteristic parameters of the battery has not been met, operation S500 is performed again. Accordingly, the characteristic parameters of the first and second batteries B1 and B2 are periodically and repeatedly obtained.

When it is determined in operation S900 that the termination condition for terminating the acquisition of the characteristic parameters of the battery has been met, the processor 10 monitors the states of the first and second batteries B1 and B2 based on the obtained characteristic parameters of the first and second batteries B1 and B2 (S1000). **In** operation S1000, the processor 10 may detect an abnormal battery cell among the plurality of battery cells based on the OCV.

Operations S400 to S1000 among the above-described operations may constitute the operating method of the battery apparatus of the present embodiment.

The term "module" used in the present specification may include a unit implemented with hardware, software, or firmware and may be used interchangeably with terms such as a logic, a logic block, a component, or a circuit. The module may be an integrated part or a minimum unit of the part or a portion thereof that performs one or more functions. For example, according to one embodiment, the module may be implemented in the form of an application-specific integrated circuit (ASIC). **In** addition, the implementations described in the present specification can be implemented as, for example, a method or a process, a device, a software program, a data stream, or a signal. Even if described only in the context of the implementation of a single form (e.g., only a method is described), the implementations of the described features may also be implemented in other forms (e.g., a device or a program). The device may be implemented with appropriate hardware, software, firmware, or the like. The method may be implemented by a device such as a processor, which is generally a processing device including a computer, a microprocessor, an integrated circuit, or a programmable logic device. The processor includes a communication device such as computers, cell phones, portable/personal digital assistants (PDAs), and other devices, which facilitate information communication between end-users.

The present invention is directed to providing a battery device and an operating method thereof that can improve the measurement reliability and measurement accuracy of characteristic parameters (e.g., open circuit voltage (OCV)) of a battery required to detect an abnormal battery cell among a plurality of battery cells constituting a battery pack applied to an electric vehicle, and a power apparatus for a vehicle in which the battery apparatus is applied.

According to embodiments of the present disclosure, since a variation in characteristic parameters of a battery caused by environmental conditions of a vehicle or the battery is eliminated by obtaining the characteristic parameters of each battery at a time point when a predefined idle time has elapsed after complementarily charging and discharging a plurality of batteries (e.g., battery modules or battery packs), it is possible to improve the accuracy of measuring the characteristic parameters of the battery.

**In** addition, according to embodiments of the present disclosure, since the amount of obtained characteristic parameters of the battery increases by repeatedly performing an operation of complementarily charging and discharging the battery and an operation of obtaining the characteristic parameters of the battery after an idle time to periodically and repeatedly obtain the characteristic parameters of the battery, it is possible to improve the accuracy of detecting an abnormal battery cell.

However, effects that can be achieved through the present disclosure are not limited to the above-described effects and other effects that are not described may be clearly understood by those skilled in the art from the detailed descriptions.

Example embodiments have been disclosed herein, and although specific terms are employed, they are used and are to be interpreted in a generic and descriptive sense only and not for purpose of limitation. **In** some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.
Further Embodiments are set out in the following clauses:
Clause 1. A battery apparatus, comprising:
   a battery switch that allows or blocks an electrical connection between a first battery and a second battery;
   a first power conversion module that performs power conversion between the first battery and an intermediary capacitor;
   a second power conversion module that performs power conversion between the second battery and the intermediary capacitor; and
   a processor configured to control the first and second power conversion modules so that the first and second batteries are complementarily charged and discharged via the intermediary capacitor in an open state of the battery switch and obtains characteristic parameters of the first and second batteries after complementarily charging and discharging the first and second batteries is completed.
Clause 2. The battery apparatus according to clause 1, wherein:
   if the processor controls the first and second power conversion modules for complementarily charging and discharging the first and second batteries is defined as a charge/discharge control operation, the charge/discharge control operation includes first and second charge/discharge control operations that are performed sequentially, and
   the processor controls the first and second power conversion modules so that the first and second batteries are complementarily charged and discharged in a process of each of the first and second charge/discharge control operations.
Clause 3. The battery apparatus according to clause 2, wherein, when performing the first charge/discharge control operation, the processor controls the first power conversion module so that the intermediary capacitor is charged by discharging the first battery and controls the second power conversion module so that the second battery is charged by discharging the intermediary capacitor.
Clause 4. The battery apparatus according to clause 3, wherein, when performing the second charge/discharge control operation following the first charge/discharge control operation, the processor controls the second power conversion module so that the intermediary capacitor is charged by discharging the second battery and controls the first power conversion module so that the first battery is charged by discharging the intermediary capacitor.
Clause 5. The battery apparatus according to clause 4, wherein the processor is further configured to switch the charge/discharge control operation from the first charge/discharge control operation to the second charge/discharge control operation when a state of charge (SOC) of the first battery reaches a predefined first reference SOC or a SOC of the second battery reaches a predefined second reference SOC in the process of performing the first charge/discharge control operation.
Clause 6. The battery apparatus according to clause 4 or clause 5, wherein the processor is further configured to terminate the charge/discharge control operation when an SOC of the first battery and an SOC of the second battery reach the same SOC in the process of performing the second charge/discharge control operation.
Clause 7. The battery apparatus according to any one of clauses 2 - 6, wherein the processor is further configured to obtain the characteristic parameters of the first and second batteries at a time point when a predefined idle time has elapsed from a time point when the charge/discharge control operation is completed.
Clause 8. The battery apparatus according to clause 7, wherein the processor is further configured to periodically and repeatedly obtain the characteristic parameters of the first and second batteries by performing the charge/discharge control operation again after obtaining the characteristic parameters of the first and second batteries.
Clause 9. The battery apparatus according to any one of clauses 2 - 8, wherein:
   the first and second batteries are configured to function as a power source of a vehicle, and
   the processor initiates the charge/discharge control operation after opening the battery switch if an ignition of the vehicle is turned off.
Clause 10. The battery apparatus according to clause 9, wherein the processor is further configured to close the battery switch so that the vehicle is driven using the first and second batteries as power sources if the vehicle's ignition is turned on after the charge/discharge control operation is completed.
Clause 11. The battery apparatus according to any preceding clause, wherein the processor is further configured to monitor states of the first and second batteries based on the characteristic parameters of the first and second batteries.
Clause 12. The battery apparatus according to clause 11, wherein:
   the characteristic parameters of the first and second batteries include open circuit voltages (OCVs) of a plurality of battery cells included in the first and second batteries, and
   the processor is further configured to detect an abnormal battery cell among the plurality of battery cells based on the OCVs.
Clause 13. The battery apparatus according to any preceding clause, wherein the first and second power conversion modules each include a bidirectional DC-DC converter.
Clause 14. An operating method of a battery, the operating method comprising:
   providing an apparatus including a battery switch that allows or blocks an electrical connection between a first battery and a second battery, a first power conversion module that performs power conversion between the first battery and an intermediary capacitor, and a second power conversion module that performs power conversion between the second battery and the intermediary capacitor;
   opening, by a processor, the battery switch;
   controlling, by the processor, the first and second power conversion modules so that the first and second batteries are complementarily charged and discharged via the intermediary capacitor; and
   obtaining, by the processor, characteristic parameters of the first and second batteries after the operation of complementarily charging and discharging the first and second batteries is completed.
Clause 15. A power apparatus for a vehicle, the power apparatus comprising:
   a battery switch that allows or blocks an electrical connection between a first battery and a second battery;
   a smoothing capacitor that smooths voltages transmitted from the first and second batteries;
   a first power conversion module that performs power conversion between the first battery and the smoothing capacitor;
   a second power conversion module that performs power conversion between the second battery and the smoothing capacitor;
   an inverter that drives a load of the vehicle based on the voltages smoothed by the smoothing capacitor; and
   a processor that controls the battery switch, the first and second power conversion modules, and the inverter, wherein:
      the processor controls opening and closing of the battery switch according to an ignition state of the vehicle, and
      according to the opening and closing state of the battery switch, i) the processor controls the first and second power conversion modules so that the first and second batteries are complementarily charged and discharged via the smoothing capacitor, or ii) the processor controls the inverter to drive the load of the vehicle.

## Claims

1. A battery apparatus, comprising:
a battery switch configured to allow or block an electrical connection between a first battery and a second battery;
a first power conversion module configured to perform power conversion between the first battery and an intermediary capacitor;
a second power conversion module configured to perform power conversion between the second battery and the intermediary capacitor; and
a processor configured to control the first and second power conversion modules so that the first and second batteries are complementarily charged and discharged via the intermediary capacitor in an open state of the battery switch and to obtain characteristic parameters of the first and second batteries after the complementarily charging and discharging the first and second batteries is completed.

2. The battery apparatus as claimed in claim 1, wherein:
the processor being configured to control the first and second power conversion modules so that the first and second batteries are complementarily charged and discharged comprises the processor being configured to sequentially perform first and second charge/discharge control operations, wherein each of the first and second charge/discharge control operations comprises a complementary charging and discharging process of the first and second batteries via the intermediary capacitor.

3. The battery apparatus as claimed in claim 2, wherein, when performing the first charge/discharge control operation, the processor controls the first power conversion module so that the intermediary capacitor is charged by discharging the first battery and controls the second power conversion module so that the second battery is charged by discharging the intermediary capacitor.

4. The battery apparatus as claimed in claim 3, wherein, when performing the second charge/discharge control operation following the first charge/discharge control operation, the processor controls the second power conversion module so that the intermediary capacitor is charged by discharging the second battery and controls the first power conversion module so that the first battery is charged by discharging the intermediary capacitor.

5. The battery apparatus as claimed in claim 4, wherein the processor is further configured to switch the charge/discharge control operation from the first charge/discharge control operation to the second charge/discharge control operation when a state of charge (SOC) of the first battery reaches a predefined first reference SOC or a SOC of the second battery reaches a predefined second reference SOC in the process of performing the first charge/discharge control operation.

6. The battery apparatus as claimed in claim 4 or claim 5, wherein the processor is further configured to terminate the second charge/discharge control operation when an SOC of the first battery and an SOC of the second battery reach the same SOC in the process of performing the second charge/discharge control operation.

7. The battery apparatus as claimed in any one of claims 2 - 6, wherein the processor is further configured to obtain the characteristic parameters of the first and second batteries at a time point when a predefined idle time has elapsed from a time point when the second charge/discharge control operation is completed.

8. The battery apparatus as claimed in claim 7, wherein the processor is further configured to periodically and repeatedly obtain the characteristic parameters of the first and second batteries by sequentially performing the first and second charge/discharge control operations again after obtaining the characteristic parameters of the first and second batteries.

9. The battery apparatus as claimed in any one of claims 2 - 8, wherein:
the first and second batteries are configured to function as a power source of a vehicle, and
the processor initiates the first charge/discharge control operation after opening the battery switch if an ignition of the vehicle is turned off.

10. The battery apparatus as claimed in claim 9, wherein the processor is further configured to close the battery switch so that the vehicle is driven using the first and second batteries as power sources if the vehicle's ignition is turned on after the second charge/discharge control operation is completed.

11. The battery apparatus as claimed in any preceding claim, wherein the processor is further configured to monitor states of the first and second batteries based on the characteristic parameters of the first and second batteries.

12. The battery apparatus as claimed in claim 11, wherein:
the characteristic parameters of the first and second batteries include open circuit voltages (OCVs) of a plurality of battery cells included in the first and second batteries, and
the processor is further configured to detect an abnormal battery cell among the plurality of battery cells based on the OCVs.

13. The battery apparatus as claimed in any preceding claim, wherein the first and second power conversion modules each include a bidirectional DC-DC converter.

14. An operating method of a battery, the operating method comprising:
providing an apparatus including a battery switch that allows or blocks an electrical connection between a first battery and a second battery, a first power conversion module that performs power conversion between the first battery and an intermediary capacitor, and a second power conversion module that performs power conversion between the second battery and the intermediary capacitor;
opening, by a processor, the battery switch;
controlling, by the processor, the first and second power conversion modules so that the first and second batteries are complementarily charged and discharged via the intermediary capacitor; and
obtaining, by the processor, characteristic parameters of the first and second batteries after the operation of complementarily charging and discharging the first and second batteries is completed.

15. A power apparatus for a vehicle, the power apparatus comprising a battery apparatus according to any one of claims 1 - 13, wherein the power apparatus further comprises:
the intermediary capacitor, wherein the intermediary capacitor is configured to smooth voltages transmitted from the first and second batteries; and
an inverter that drives a load of the vehicle based on the voltages smoothed by the intermediary capacitor; and
wherein the processor is further configured to control the battery switch and the inverter, wherein:
the processor is configured to control opening and closing of the battery switch according to an ignition state of the vehicle, and
wherein the processor is configured control, according to the opening and closing state of the battery switch, i) the first and second power conversion modules so that the first and second batteries are complementarily charged and discharged via the intermediary capacitor, or ii) the inverter to drive the load of the vehicle.
